# EUROPEAN PATENT APPLICATION

(11) **EP 4 729 837 A1**
(43) Date of publication of application: **22.04.2026**
(21) Application number: 24839842.2
(22) Date of filing: 05.02.2024
(51) Int. Cl.: F24C 3/12, F24C 7/08, F24C 15/16, H04N 23/57, G06V 20/64

(54) **COOKING DEVICE AND METHOD FOR CONTROLLING SAME**

(30) Priority: 12.07.2023 KR 20230090292
(71) Applicant: LG Electronics Inc., Yeongdeungpo-gu Seoul 07336 (KR)
(72) Inventor: LEE, Suyong, Seoul 08592 (KR); PARK, Kyoung-Joon, Seoul 08592 (KR); JUN, Hyunwoo, Seoul 08592 (KR); LEE, Yong Hyun, Seoul 08592 (KR); YANG, Hak Soon, Seoul 08592 (KR)
(74) Representative: Vossius & Partner Patentanwälte Rechtsanwälte mbB
(86) International application number: PCT/KR2024/001662
(87) International publication number: WO 2025/014021

(57) **Abstract**

Disclosed is an invention relating to a cooking device and a method for controlling same. The disclosed invention is characterized in that a position of a rack with respect to a plurality of mounting protrusions formed on a side wall of a cavity to mount the rack is identified, and a mounting position of the rack is determined on the basis of the identified information.

## Description

### TECHNICAL FIELD

The present disclosure relates to a cooking appliance, and more particularly, to a cooking appliance including a camera for imaging an inside of a cooking appliance and a method for controlling same.

### BACKGROUND

A cooking appliance is one of home appliances for cooking food, and is installed in a kitchen space to cook food according to an intention of a user. Such a cooking appliance may be variously classified according to a heat source, a shape, or a type of fuel used.

When the cooking appliance is classified according to a type of cooking food, the cooking appliance may be classified into an open-type cooking appliance and a closed-type cooking appliance depending on a shape of a space on which food is placed. Closed-type cooking appliances include an oven and a microwave oven, and open-type cooking appliances include a cooktop, a hob, a griddle, and the like.

A closed-type cooking appliance is a cooking appliance configured to shield a space in which food is located and to heat the shielded space to cook food. In the closed-type cooking appliance, a cooking chamber, which is a space that is shielded when food is placed therein and when the food is to be cooked, is provided. The cooking chamber becomes a space in which the food is substantially cooked.

In the closed-type cooking appliance, a door for selectively opening and closing the cooking chamber is provided to be rotatable. The door is rotatably installed on a main body in which the cooking chamber is formed by a door hinge provided between the main body and the door. The door may selectively open and close the cooking chamber by rotating about a portion coupled to the main body through the door hinge.

A heat source is provided in an inner space of the cooking chamber that is opened and closed by the door so as to heat the cooking chamber. As the heat source, a gas burner, an electric heater, or the like may be used.

Recently, closed-type cooking appliances including a built-in camera have been developed. Such cooking appliances may obtain an image related to food accommodated inside the cooking chamber through the built-in camera. The image obtained by the built-in camera may be used to be displayed through a display provided in the cooking appliance or through a smart device of a user, and may be used as data for controlling a cooking operation of the cooking appliance.

When the image obtained by the built-in camera is used as data for controlling the cooking operation of the cooking appliance, the cooking appliance may analyze an image related to food obtained by the built-in camera to determine a type of the food or to determine a cooking progress degree of the food, and may control the cooking operation of the cooking appliance based on information analyzed in this manner.

Meanwhile, a rack or tray (hereinafter referred to as "rack") for seating food to be cooked may be provided inside the cooking chamber. Also, mounting protrusions may be provided on a side wall of a cavity forming the cooking chamber, and the rack may be seated on the mounting protrusions and may be mounted inside the cooking chamber.

On the side wall of the cavity, a plurality of the mounting protrusions may be arranged along an up and down direction. A mounting position of the rack may vary depending on which one of the plurality of the mounting protrusions the rack is seated on.

According to a type of a recipe cooked in the cooking appliance, a mounting position of the rack may need to be selected differently. That is, the rack must be mounted at a position suitable for a selected cooking operation so that effective cooking for the corresponding recipe may be performed.

In the cooking appliance including the built-in camera, an image obtained by the built-in camera may also be used as data for checking a position of the rack. In this case, the cooking appliance may analyze the image obtained by the built-in camera to identify a mounting position of the rack.

If it is determined that the rack is not mounted at a position set to be suitable for a currently selected cooking operation, the cooking appliance may output a notification to a user. The user may recognize, through the notification output in this manner, that a current position of the rack is not suitable for the selected cooking operation, and may change a mounting position of the rack to a position suitable for the currently selected cooking operation.

To identify the mounting position of the rack by analyzing an image obtained by the built-in camera, a separate indicator is generally added to the cooking appliance. For example, a separate indicator may be attached or printed on a side wall of the cavity or on the mounting protrusion, and each indicator may be provided as a number, a letter, a figure, or the like.

The indicators may be arranged at positions corresponding to the number of the racks to be identified, and the cooking appliance may identify the mounting position of the rack by analyzing the image obtained by the built-in camera to identify a position of an indicator adjacent to the rack.

However, a method using the indicators causes a problem of increasing manufacturing cost of the cooking appliance due to a cost required to separately form the indicators.

Also, when the indicators become blurred or erased as time passes, when foreign substances are attached to the indicators, or when the indicators are damaged during a mounting or withdrawing process of the rack, a recognition rate for the indicators may be degraded, and thus a problem may occur in which the mounting position of the rack is not properly identified.

### SUMMARY

### Technical Problems

One object of the present disclosure is to provide a cooking appliance and a method for controlling same capable of effectively identifying a mounting position of a rack without adding a separate indicator.

Also, another object of the present disclosure is to provide a cooking appliance and a method for controlling same in which a performance of identifying a rack position is improved.

Also, another object of the present disclosure is to provide a cooking appliance and a method for controlling same capable of enabling optimal cooking according to a mounting position of a rack.

### Technical Solutions

A control method of a cooking appliance according to one embodiment of the present disclosure for achieving the above objects is characterized by identifying a position of a rack relative to a plurality of mounting protrusions formed on a side wall of a cavity for mounting the rack, and determining a mounting position of the rack based on identified information.

Through this, the mounting position of the rack may be effectively identified even when no separate marking or structure such as an indicator is added to the cooking appliance.

Also, another embodiment of the present disclosure is characterized by determining a mounting position of the rack by using information obtained as a result of recognizing the mounting protrusion formed on the side wall of the cavity for mounting the rack, and information obtained as a result of identifying a height of the rack.

A method for controlling a cooking appliance according to one aspect of the present disclosure, the cooking appliance including a mounting protrusion protruding into the cooking chamber from a side wall of a cavity forming the cooking chamber, and a rack that is seated on any one of a plurality of mounting protrusions arranged in an up and down direction and is mounted inside the cooking chamber, the method comprising: an imaging step of imaging the cooking chamber; a recognition step of recognizing the mounting protrusion and the rack in an image obtained in the imaging step; and a position determining step of determining a mounting position of the rack based on information identifying a position of the rack relative to the plurality of the mounting protrusions.

Also, the present disclosure may further comprise: a counting step of identifying a number of the mounting protrusions arranged above the rack, or a number of the mounting protrusions arranged below the rack.

Also, in the position determining step, it is preferable to determine the mounting position of the rack based on information identified in the counting step.

Also, the present disclosure may further comprise a height identifying step of identifying a height of the rack.

Also, in the position determining step, it is preferable that the cooking appliance determines a mounting position of the rack based on information identified in the counting step and information identified in the height identifying step.

Also, the rack may include a position indicator arranged at a front and rear end of the rack.

Also, it is preferable that the recognition step recognizes the position indicator, and the height identifying step identifies a height of the position indicator recognized in the recognition step.

Also, the counting step may comprise an upper counting step of identifying a number of the mounting protrusions arranged above the rack, and a lower counting step of identifying a number of the mounting protrusions arranged below the rack.

Also, in the position determining step, it is preferable that the cooking appliance determines the mounting position of the rack based on a result value of the upper counting step, a result value of the lower counting step, and a result value of the height identifying step when two or more of the result values are matched.

Also, the present disclosure may further comprise a comparing step of comparing a set value with a result value in the position determining step.

Also, the present disclosure may further comprise a guidance displaying step of displaying guidance related to adjusting a rack position when the set value and the result value in the position determining step are different.

Also, the present disclosure may further comprise a door opening detecting step of detecting whether a door is opened after guidance is displayed in the guidance displaying step.

Also, the present disclosure may further comprise a re-determining step of re-determining the mounting position of the rack when opening and closing of the door are sequentially detected in the door opening detecting step.

Also, the present disclosure may further comprise a setting changing step of changing a cooking operation-related setting when opening of the door is not detected within a set time in the door opening detecting step.

Also, the present disclosure may further comprise a setting changing step of changing a cooking operation-related setting when a cooking start signal is input after guidance is displayed in the guidance displaying step.

Also, a cooking appliance according to another aspect of the present disclosure may comprise: a cavity forming a cooking chamber therein; a mounting protrusion protruding into the cooking chamber from a side wall of the cavity; a rack seated on any one of a plurality of mounting protrusions arranged in an up and down direction and mounted inside the cooking chamber; a camera imaging the inside of the cooking chamber; and a controller determining a mounting position of the rack based on an image obtained by the camera.

Also, it is preferable that the controller recognizes the mounting protrusion and the rack in the image obtained by the camera, and determines the mounting position of the rack based on information identifying a position of the rack relative to the plurality of the mounting protrusions.

Also, it is preferable that the controller identifies a number of the mounting protrusions arranged above the rack, a number of the mounting protrusions arranged below the rack, and a height of the position indicator in the image obtained by the camera, and determines the mounting position of the rack based on identified information.

### Advantageous Effects

According to the cooking appliance and the method for controlling same of the present disclosure, a mounting position of a rack may be effectively identified even when no separate marking or structure such as an indicator is added to the cooking appliance.

Accordingly, the present disclosure may provide improved cooking performance while suppressing an increase in manufacturing cost.

Also, the present disclosure may identify the mounting position of the rack by using the mounting protrusion forming a portion of the cavity and formed to have strength sufficient to support the rack and food supported on the rack.

Accordingly, the present disclosure may improve a recognition rate for the mounting protrusion, and may provide enhanced rack position identifying performance through this.

Also, when a set position of the rack and an actual position of the rack are different, the present disclosure may change a cooking operation-related setting to a setting suitable for the actual position of the rack, and may allow cooking to be performed according to the changed setting, thereby providing an effect of enabling optimal cooking according to a mounting position of the rack.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view showing a cooking appliance according to one embodiment of the present disclosure;
FIG. 2 is a front view showing a door open state of the cooking appliance illustrated in FIG. 1;
FIG. 3 is a side sectional view showing an internal structure of the cooking appliance illustrated in FIG. 1;
FIG. 4 is a side sectional view showing a mounting state of a rack in the cooking appliance according to one embodiment of the present disclosure;
FIG. 5 is a configuration diagram schematically illustrating a configuration of the cooking appliance according to one embodiment of the present disclosure;
FIG. 6 is a flowchart showing a control process of the cooking appliance according to one embodiment of the present disclosure;
FIG. 7 is a diagram illustrating an example of a method of identifying a height of a rack in a height identifying step; and
FIG. 8 is a diagram illustrating an example of a method of identifying a position of a rack relative to a mounting protrusion.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, *all modifications, equivalents or replacements as well as a replacement of the configuration of any one embodiment with the configuration of another embodiment or an addition of the configuration of any one embodiment to the configuration of another embodiment, within* the technical spirit and scope of the disclosure, *are to be included in* the scope of the disclosure.

The accompanying drawings are provided for a better understanding of the embodiments set forth herein and are not intended to limit the technical spirit of the disclosure. It is to be understood that *all the modifications, equivalents or replacements within* the spirit and technical scope of the disclosure *are included in* the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Entire structure of cooking appliance]

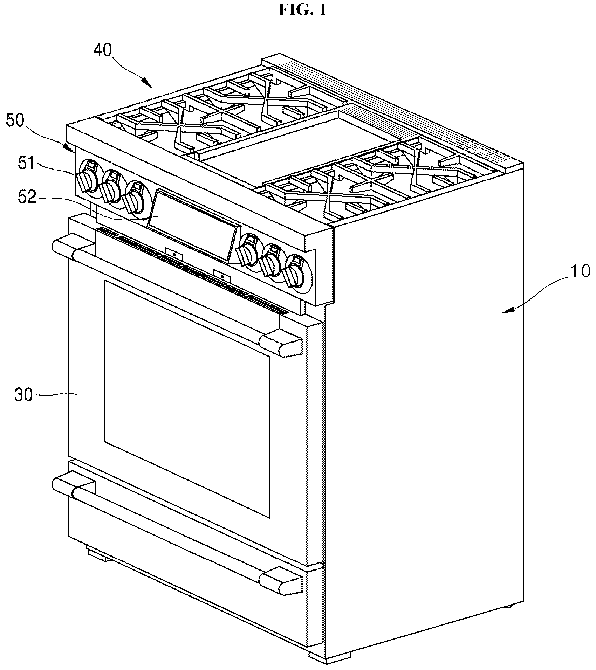

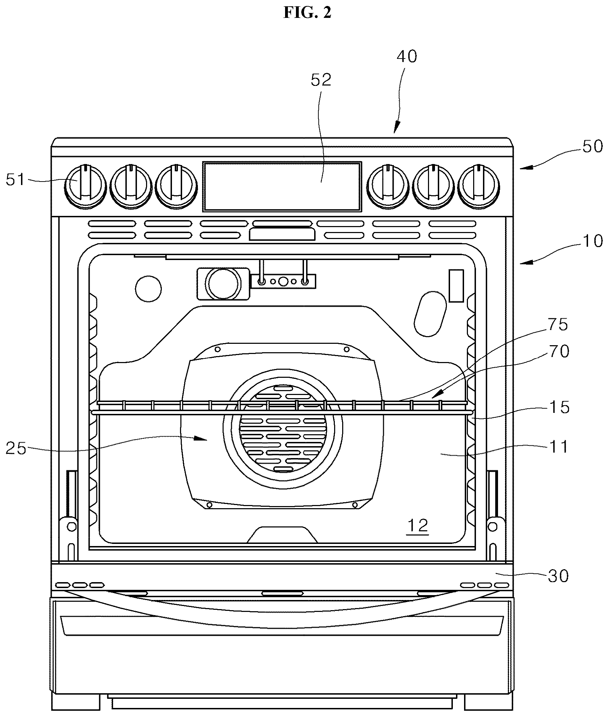

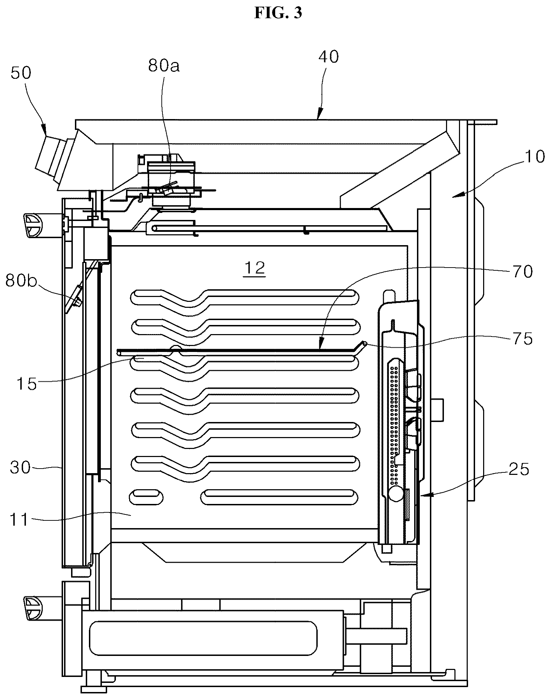

FIG. 1 is a perspective view illustrating a cooking appliance according to one embodiment of the present disclosure, FIG. 2 is a side sectional view showing an internal structure of the cooking appliance illustrated in FIG. 1, and FIG. 3 is a front view showing a door open state of the cooking appliance illustrated in FIG. 1.

Referring to FIGS. 1 to 3, a cooking appliance may have an exterior formed by a main body 10. The main body 10 may be provided in a form including a substantially hexahedral shape, and may be formed of a material having a predetermined strength so as to protect a plurality of components installed in an inner space thereof.

The main body 10 includes a cavity 11 forming a framework of the main body 10. The cavity 11 may be formed in a form of a hexahedron having a front side open, and a cooking chamber 12 is provided inside the cavity 11.

The cavity 11 may be formed in a form of a hexahedron having a front side open, and the cooking chamber 12 may be formed inside the cavity 11. That is, the cooking chamber 12 may be formed as a substantially hexahedral space arranged inside the cavity 11 and may be formed as a space opened toward a front side.

In a state in which such a cooking chamber 12 is shielded, the inside of the cooking chamber 12 may be heated, whereby food may be cooked. That is, in the cooking appliance of the present embodiment provided as a sealed cooking appliance, the cooking chamber 12 is substantially a space in which food is cooked.

A cooking appliance may include a heating part 20 heating a cooking chamber 12. The heating part 20 may be provided as a heating device using a gas fuel. As another example, the heating part 20 may be provided as a heater using electricity. As such, a structure of the heating part 20 may be changed according to a type of a heat source used.

In the present embodiment, the heating part 20 is illustrated as being provided as a heating device using a gas fuel. Accordingly, a broil burner may be provided above the cooking chamber 12, a bake burner may be provided below the cooking chamber 12, and a convection device 25 may be provided at a rear side of the cooking chamber 12.

The broil burner may heat an inner space of the cooking chamber 12 from above, and the bake burner may heat the inner space of the cooking chamber 12 from below. Also, the convection device 25 may allow the inner space of the cooking chamber 12 to be uniformly heated by circulating air while suctioning air inside the cooking chamber 12, heating the air, and discharging the heated air into the inner space of the cooking chamber 12.

A door 30 for selectively opening and closing the cooking chamber 12 may be rotatably provided in the cooking appliance. As an example, the door 30 may be provided in a form in which the upper end of the door 30 rotates up and down about a lower end thereof in a pull-down manner to open and close the cooking chamber 12.

A cooktop part 40 provided to cook food by heating food or a container containing food may be arranged on an upper portion of the main body 10. The cooktop part 40 may be provided with a top plate forming an upper exterior and closing an upper end of the main body 10.

At least one heating part for heating food to be cooked or a container containing the food may be provided in a central portion of the cooktop part 40. For example, the heating part may be provided as a heating device using gas fuel.

As another example, the heating part may be provided as an induction heater using electricity. As such, a structure of the heating part may be changed depending on a type of a heat source used.

A control panel 50 may be provided at an upper front portion of a cooking appliance, that is, at an upper front portion of a cavity 11. The control panel 50 may form a portion of a front exterior of the cooking appliance. The control panel 50 may include a knob 51 for adjusting an operation of the cooking appliance, a display 52 displaying an operation state of the cooking appliance, and the like.

An electrical equipment chamber 60 configured to provide a space in which electrical equipments are located may be provided in an internal space of the main body 10, that is, in a space between the cooktop part 40 and the cooking chamber 12. The electrical equipment chamber 60 may be a space formed between the cooktop part 40 and the cooking chamber 12, or may be a space conceptualized as a combination of a space formed between the cooktop part 40 and the cooking chamber 12 and a space inside the cooktop part 40. A front side of the electrical equipment chamber 60 may be shielded by the control panel 50 or, as illustrated in the present embodiment, may be shielded by the door 30.

### [Rack mounting structure]

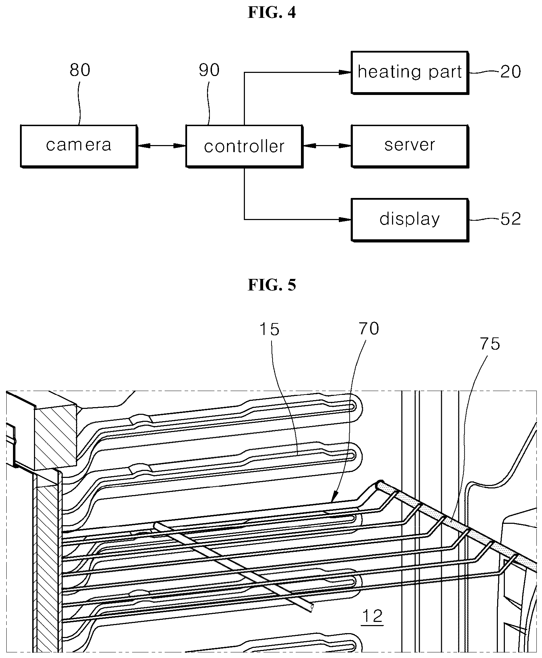

FIG. 4 is a side sectional view showing a mounting state of a rack in the cooking appliance according to one embodiment of the present disclosure.

As illustrated in FIGS. 2 to 4, the cooking appliance of the embodiment may include a rack 70 provided for seating food. For example, the rack 70 may be formed in a shape corresponding to a bottom surface shape of the cooking chamber 12, for example, in a rectangular planar shape.

The rack 70 may support food from below and may be mounted inside the cooking chamber 12. The rack 70 may be used to place food seated on the rack 70 at a height desired by a user, and may be mounted inside the cooking chamber 12 or withdrawn to outside the cooking chamber 12 as necessary.

To allow the rack 70 to be mounted inside the cooking chamber 12, a mounting protrusion 15 may be provided inside the cooking chamber 12. The mounting protrusion 15 may be provided on both side walls of a cavity 11 forming both side surfaces of the cooking chamber 12.

Each mounting protrusion 15 may be formed to protrude into the cooking chamber 12 from a side wall of the cavity 11. That is, each mounting protrusion 15 may be formed in a shape bulging laterally toward the cooking chamber 12 from the side wall of the cavity 11.

Each mounting protrusion 15 may be formed integrally with the cavity 11. For example, the mounting protrusion 15 may be formed integrally with the cavity 11 in a form molded together with the side wall of the cavity 11 when the cavity 11 is molded. The mounting protrusion 15 may be formed in a form in which a portion of a surface forming the side wall of the cavity 11 is pressed toward an inner side of the cooking chamber 12 and protrudes toward the cooking chamber 12.

The mounting protrusion 15 forming a portion of the cavity 11 and formed together with the cavity 11 as described above may be formed of a same material as the cavity 11 and may be formed of a metal material having sufficient strength like the cavity 11. The mounting protrusion 15 may be formed to have sufficient strength to support the rack 70 seated on the mounting protrusion 15 and food supported on the rack 70.

A plurality of mounting protrusions 15 may be provided on each side wall of the cavity 11. The plurality of mounting protrusions 15 provided on each side wall of the cavity 11 may be arranged in an up and down direction, and each mounting protrusion 15 may be arranged to be spaced at a predetermined interval in the up and down direction from another adjacent mounting protrusion 15.

The mounting protrusions 15 provided on a left side wall of the cavity 11 and the mounting protrusions 15 provided on a right side wall of the cavity 11 may be arranged to face each other in a lateral direction and may be arranged at the same height. For example, a pair of mounting protrusions 15 arranged at a lowest position of each side wall of the cavity 11 may be arranged at a same height, and a pair of mounting protrusions 15 arranged at a highest position of each side wall of the cavity 11 may be arranged at a same height.

In the present embodiment, seven mounting protrusions 15 are illustrated as being arranged on each side wall of the cavity 11. However, the present disclosure is not limited thereto, and a number of the mounting protrusions 15 may be increased or decreased as necessary in consideration of a size of a cooking appliance, or the like.

The rack 70 may be seated on any one of the mounting protrusions 15 arranged in an up and down direction and may be mounted inside the cooking chamber 12. A mounting position of the rack 70 may vary depending on which one of the mounting protrusions 15 the rack 70 is seated on.

For example, when the rack 70 is seated on a mounting protrusion 15 arranged at a lowest position among the mounting protrusions 15, the rack 70 may be expressed as being mounted at a first level. As another example, when the rack 70 is seated on a mounting protrusion 15 arranged at a third position from below among the mounting protrusions 15, the rack 70 may be expressed as being mounted at a third level.

Meanwhile, the rack 70 may include a position indicator 75. The position indicator 75 may be provided to allow a position of the rack 70 to be easily identified. For example, the position indicator 75 may be formed in a shape protruding further upward than other portions of the rack 70. As another example, the position indicator 75 may be formed in a form having a different color from other portions of the rack 70.

The position indicator 75 may be arranged at an end of the rack 70. For example, the position indicator 75 may be arranged at front and rear ends of the rack 70. As another example, the position indicator 75 may be arranged at lateral direction ends of the rack 70.

In the present embodiment, the position indicator 75 is illustrated as being arranged at the front and rear ends of the rack 70. The position indicator 75 may be arranged at a position spaced by a certain distance from a side wall of the cavity 11 and the mounting protrusion 15. When the position indicator 75 is arranged in this manner, a possibility that the position indicator 75 may be worn due to repeated contact with the side wall of the cavity 11 or the mounting protrusion 15, or that the position indicator 75 may be hidden by the mounting protrusion 15 may be reduced.

### [Structure related to imaging the cooking chamber]

FIG. 5 is a configuration diagram schematically illustrating a configuration of the cooking appliance according to one embodiment of the present disclosure.

Referring to FIGS. 2 to 5, the cooking appliance according to an embodiment of the present disclosure may include a camera 80. The camera 80 may be installed inside the cooking appliance and may be provided to image the cooking chamber 12.

For example, a camera 80a may be arranged at an upper side of the cavity 11. The camera 80a may acquire an image related to food accommodated inside the cooking chamber 12 by imaging an inside of the cooking chamber 12 from above the cooking chamber 12.

As another example, a camera 80b may be arranged at a front side of the cooking chamber 12. For example, the camera 80b may be arranged inside a door 30. The camera 80b installed in the door 30 may acquire an image related to food accommodated inside the cooking chamber 12 by imaging an inside of the cooking chamber 12 from a front upper side of the cooking chamber 12.

As yet another example, the cooking appliance may include both the camera 80a arranged at an upper side of the cavity 11 and the camera 80b installed in the door 30. The cooking appliance may image a target object by using the plurality of cameras 80a and 80b arranged in this manner, and may extract three-dimensional information of the target object based on images respectively transmitted from the plurality of cameras 80a and 80b.

A position of the camera 80 is not limited to the positions described above and may be appropriately selected among various positions suitable for effectively imaging an object accommodated in the cooking chamber 12, such as food, the mounting protrusion 15, and the rack 70 (hereinafter referred to as "the target object").

In the present embodiment, the cooking appliance is illustrated as including both the camera 80a arranged at an upper side of the cavity 11 and the camera 80b installed in the door 30. Hereinafter, the camera 80a arranged at an upper side of the cavity 11 and the camera 80b installed in the door 30 will be collectively referred to as a camera 80.

The cooking appliance of the present embodiment may also include a controller 90. The controller 90 may be provided to control an operation of the cooking appliance. For example, the controller 90 may control an operation of the heating part 20 according to an input signal input by a knob 51 or a switch provided on the control panel 50.

In addition, an image acquired by the camera 80 may be transmitted to the controller 90. The controller 90 may extract information such as a type, a size, and a surface color of food based on an image received from the camera 80. The controller 90 may also extract information related to positions of the mounting protrusion 15, the rack 70, and the position indicator 75 based on an image received from the camera 80.

### [Control process of cooking appliance]

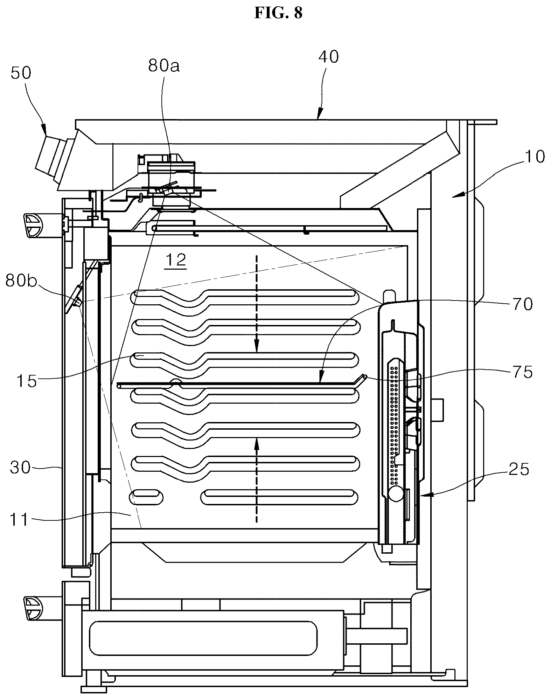

FIG. 8 is a flowchart showing a control process of the cooking appliance according to one embodiment of the present disclosure.

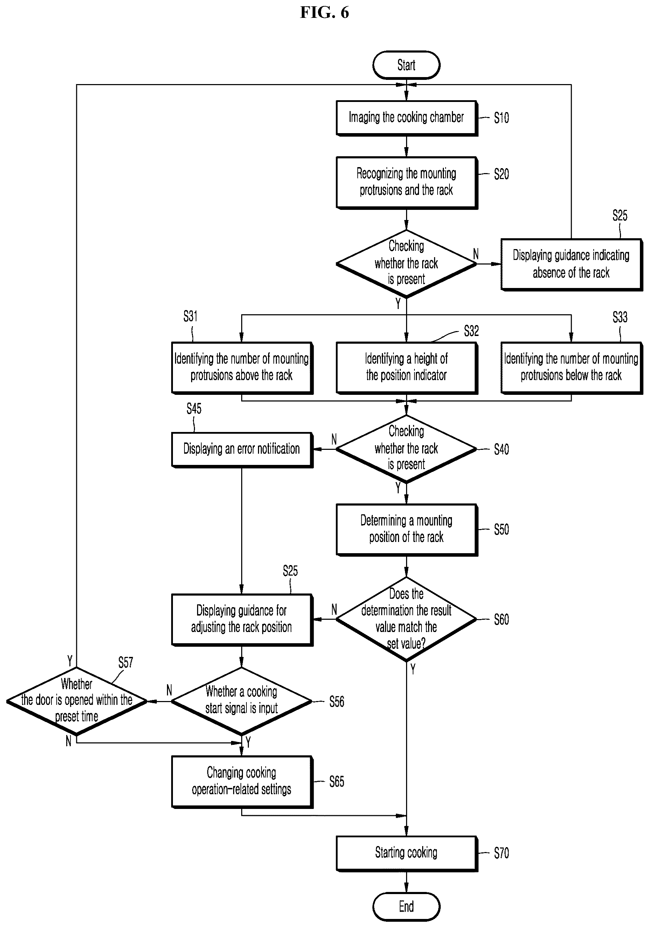

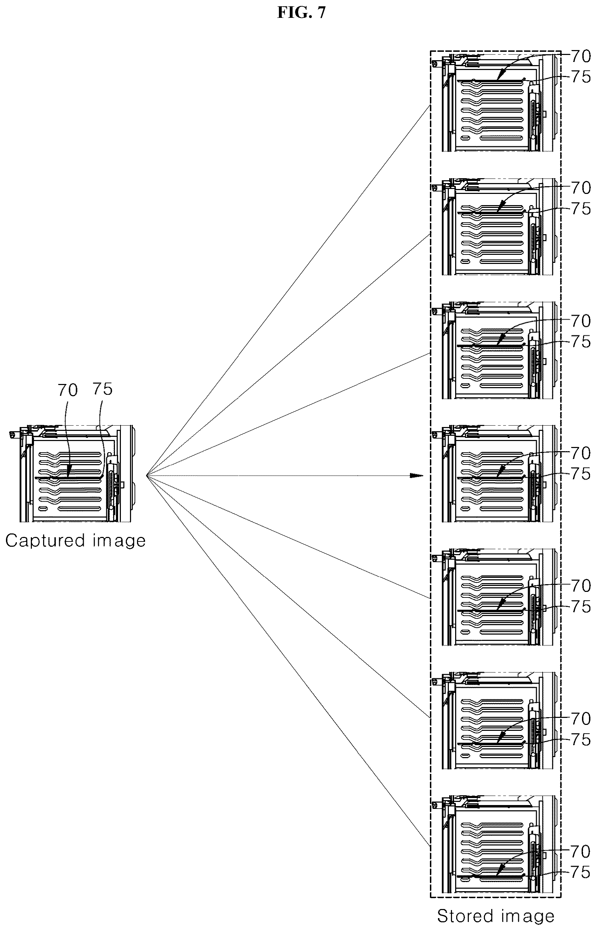

Hereinafter, an automatic cooking control process of a cooking appliance according to one embodiment of the present disclosure will be described with reference to FIGS. 4 to 8.

Referring to FIGS. 4 to 6, the cooking appliance according to the present embodiment may provide an automatic cooking function using the camera 70. The cooking appliance may analyze food-related images or images acquired by the camera 70 to determine a type and a size of food or to determine a cooking progress degree of the food, and may control a cooking operation of the cooking appliance based on information analyzed in this manner.

A user may select an automatic cooking mode by operating a knob 51 or a switch provided on the control panel 50. When the automatic cooking mode is selected, the cooking appliance may first perform a imaging step S10 to provide the automatic cooking function. In the imaging step S10, an operation of acquiring an image of a target object such as food accommodated inside the cooking chamber 12, the mounting protrusion 15, and the rack 70 may be performed by using the camera 70.

An image photographed by the camera 70 as described above may be transmitted to the controller 90. The controller 90 may recognize the mounting protrusion 15 and the rack 70 in an image acquired in the imaging step S10 (recognition step S20).

For example, an image of an inside of the cooking chamber in which the mounting protrusion is provided may be stored in the cooking appliance. The controller 90 may specify which portion corresponds to the mounting protrusion 15 in the image acquired in the imaging step by referring to the image of the mounting protrusion stored in the cooking appliance.

In addition, an image of the rack may be stored in the cooking appliance. The controller 90 may specify which portion corresponds to the rack 70 in an image acquired in the imaging step by referring to an image of the rack stored in the cooking appliance.

In the recognition step S20, the controller 90 may recognize all of the mounting protrusions 15 arranged on both side walls of the cavity 11, or may recognize only the mounting protrusions 15 arranged on one of the side walls of the cavity 11.

Also, in the recognition step S20, the controller 90 may recognize an entire portion of the rack 70 in an image acquired in the imaging step, or may recognize only a portion of the rack 70, for example, the position indicator 75.

When the rack 70 is not recognized in the recognition step S20, that is, when the controller 90 determines in the recognition step S20 that the rack 70 does not exist inside the cooking chamber 12, the cooking appliance may display guidance related to the presence of the rack 70 (S25).

For example, the cooking appliance may display guidance such as "The cooking chamber does not contain a rack" or "Insert a rack into the cooking chamber" to the user. Such guidance may be displayed in a text or image form through the display 52, or may be displayed in a voice form output through a speaker provided in the cooking appliance.

When the rack 70 is recognized in the recognition step S20, the controller 90 may proceed to a counting step. In the counting step, the controller 90 may identify a number of mounting protrusions 15 arranged above the rack 70 or a number of mounting protrusions 15 arranged below the rack 70.

For example, in the recognition step S20, a step of identifying a number of mounting protrusions 15 arranged above the rack 70 (upper counting step S31) and a step of identifying a number of mounting protrusions 15 arranged below the rack 70 (lower counting step S32) may be performed together. That is, the controller 90 may perform both an operation of identifying a number of mounting protrusions 15 arranged above the rack 70 and an operation of identifying a number of mounting protrusions 15 arranged below the rack 70.

For example, the upper counting step S31 may be performed in a form of identifying a number of mounting protrusions 15 visible above the rack 70. For example, when the rack 70 is mounted at a fourth level, three mounting protrusions 15 may be visible above the rack 70, and accordingly, the controller 90 may estimate that a number of mounting protrusions 15 arranged above the rack 70 is three.

Also, the lower counting step S32 may be performed in a form of identifying a number of mounting protrusions 15 visible below the rack 70. In this case, a mounting protrusion 15 on which the rack 70 is seated, that is, a mounting protrusion 15 positioned at the fourth level, may be excluded from a counting target. This is because the mounting protrusion 15 on which the rack 70 is seated is very close to the rack 70, making it difficult for the rack 70 to be properly recognized.

For example, the controller 90 may identify a number of mounting protrusions 15 arranged below the rack 70 but may include in the counting target only the mounting protrusions 15 spaced from the rack 70 by a predetermined distance or more in an up and down direction.

In this case, a spacing distance between the rack 70 and the mounting protrusion 15 serving as a criterion may be appropriately set in consideration of performance of the camera 80 and the controller 90. For example, the distance may be set to a length equal to or greater than a thickness of the rack 70 and equal to or less than approximately half of a spacing distance between a pair of adjacent mounting protrusions 15.

In addition, when the rack 70 is recognized in the recognition step S20, the controller 90 may further perform a height identifying step S33. In the height identifying step, the controller 90 may identify a height of the rack 70.

For example, the controller 90 may recognize the position indicator 75 in an image acquired in the imaging step and may identify a height of the rack 70 based on the recognized position indicator 75.

As another example, the controller 90 may recognize an upper end of the rack 70 in an image acquired in the imaging step and may identify a height of the rack 70 based on the recognized upper end of the rack 70.

According to the present embodiment, a plurality of images of an inside of the cooking chamber in which the rack is arranged may be stored in the cooking appliance. That is, the cooking appliance may store images representing various rack arrangement forms. For example, the cooking appliance may store a plurality of images respectively representing forms in which the rack is arranged at each of levels 1 to 7.

The controller 90 may identify a height of the rack 70 after performing a process of comparing the rack 70 or the position indicator 75 recognized in the recognition step S20 with the rack 70 or the position indicator 75 stored in each of the plurality of images stored in the cooking appliance in relation to a rack arrangement position.

For example, when a position of the rack 70 or the position indicator 75 recognized in the recognition step S20 matches a position of a rack or a position indicator represented in an image including a rack arranged at a fourth level among the plurality of images stored in the cooking appliance, the controller 90 may estimate a height of the rack 70 as a height corresponding to the fourth level.

When the counting step or both the counting step and the height identifying step are completed, a position determining step S50 may subsequently be performed.

In the position determining step S50, the controller 90 may determine a mounting position of the rack 70 based on information identifying a position of the rack 70 relative to the plurality of mounting protrusions 15.

For example, the controller 90 may determine a mounting position of the rack 70 based on information identified in the counting step. As another example, the controller 90 may determine a mounting position of the rack 70 based on information identified in the counting step and the height identifying step. In the present embodiment, the controller 90 is illustrated as determining a mounting position of the rack 70 based on information identified in the counting step and the height identifying step.

When the counting step and the height identifying step are completed as described above, and information such as a number of mounting protrusions 15 arranged above the rack 70, a number of mounting protrusions 15 arranged below the rack 70, and a height of the rack 70 is obtained, the controller 90 may proceed to the position determining step S50 by using the obtained information.

Before the position determining step S50 is performed, the controller 90 may compare result values obtained in the counting step and result values obtained in the height identifying step (S40). Specifically, the controller 90 may compare a result value in the upper counting step S31, a result value in the lower counting step S32, and a result value in the height identifying step S33, and may check whether these result values match each other.

In the position determining step S50, the controller 90 may determine a mounting position of the rack 70 based on a corresponding result value when two or more of the result values obtained in the counting step and the height identifying step match each other.

Specifically, the controller 90 may determine a mounting position of the rack 70 based on a corresponding result value when two or more of the result values in the upper counting step S31, the lower counting step S32, and the height identifying step S32 match each other.

For example, when a level of the rack 70 estimated based on a number of the rack 70 counted in the upper counting step S31, a level of the rack 70 estimated based on a number of the rack 70 counted in the lower counting step S32, and a level of the rack 70 estimated based on a height of the rack 70 identified in the height identifying step S33 are all the fourth level, the controller 90 may determine that the rack 70 is mounted at the fourth level.

As another example, when the result values in the upper counting step S31, the lower counting step S32, and the height identifying step S32 do not all match each other, the controller 90 may determine a mounting position of the rack 70 based on two result values that match each other.

For example, when a level of the rack 70 estimated based on a number of the rack 70 counted in the upper counting step S31 and a level of the rack 70 estimated based on a height of the rack 70 identified in the height identifying step S33 are both the third level, but a level of the rack 70 estimated based on a number of the rack 70 counted in the lower counting step S32 is the fourth level, the controller 90 may determine a mounting position of the rack 70 based on the result values in the upper counting step S31 and the height identifying step S32, and accordingly, the mounting position of the rack 70 may be determined as the third level.

If the result value in the upper counting step S31, the result value in the lower counting step S32, and the result value in the height identifying step S32 are all different from one another, the cooking appliance may display a notification indicating that an error has occurred (S45). For example, the cooking appliance may display to the user a notification such as "Failed to identify the rack position."

Then, the cooking appliance may further display guidance related to adjusting the position of the rack 70 (guidance display step S55). For example, the cooking appliance may display to the user guidance such as "Adjust the rack position."

Such guidance may also be displayed in the form of text or an image through the display 52, or may be provided in the form of audio output through a speaker provided in the cooking appliance.

Meanwhile, when a result of determining a mounting position of the rack 70 is derived in the position determining step S50, a comparison step S60 may subsequently be performed. In the comparison step S60, a comparison may be made between a set value and a result value in the position determining step S50.

In the present embodiment, the set value is defined as a value preset in an automatic cooking mode selected for the currently performed cooking, and corresponds to a mounting position of the rack 70 that is predetermined to be appropriate for cooking performed by the corresponding automatic cooking mode.

For example, in an automatic cooking mode mainly using a broil burner arranged above the cooking chamber 12, the set value may be set to any one of the fifth to seventh levels, and in an automatic cooking mode mainly using a bake burner arranged below the cooking chamber 12, the set value may be set to any one of the first to third levels.

When it is determined as a result of the comparison step S60 that the set value and the result value in the position determining step S50 match each other, the controller 90 may control an operation of the heating part 20 so that automatic cooking is performed according to a predetermined heating intensity and heating time (S70).

That is, when it is confirmed that the rack 70 is mounted at a position set in the automatic cooking mode selected by the user, the cooking appliance may perform automatic cooking according to the corresponding automatic cooking mode.

If, as a result of the comparison step S60, it is determined that the set value and the result value in the position determining step S50 are different from each other, the cooking appliance may display guidance related to adjusting the position of the rack 70 (S55).

After the guidance related to adjusting the position of the rack 70 is displayed, a door opening detection step S57 may be performed. In the door opening detection step S57, whether the door 30 is opened may be detected. The detection of whether the door 30 is opened may be performed by a sensor installed around the door 30.

If, after guidance is displayed in the guidance display step S55, opening and closing of the door 30 are sequentially detected within a preset time, and if, for example, it is confirmed that the door 30 is sequentially opened and closed within a preset time of five minutes after guidance related to adjusting the rack position is displayed, a re-determination step of re-determining the mounting position of the rack 70 may be performed.

For example, the re-determination step may be performed in a manner of sequentially performing the imaging step S10, the recognition step S20, the counting steps S31 and S32, the height identifying step S33, the position determining step S50, and the comparison step S60 again.

If the door 30 is not opened within a preset time after guidance displayed in the guidance display step S55, for example, guidance such as "Adjust the rack position," is provided to the user, a setting change step S65 may be performed.

In the setting change step S65, the controller 90 may perform an operation of changing cooking operation-related settings. At this time, the controller 90 may change at least one of the settings related to a type of the heating part 20 to be operated, a heating intensity of the heating part 20, and a heating time of the heating part 20.

For example, in the setting change step S65, cooking operation-related settings may be changed so that an operation of the heating unit 20 suitable for the mounting position of the rack 70, as identified in the position determining step S50, can be performed.

For example, although the set value is set to the second level in the initially selected automatic cooking mode, if the mounting position of the rack 70 identified in the position determining step S50, that is, the actual mounting position of the rack 70, is the fourth level, the controller 90 may change cooking operation-related settings so that an operation of the heating part 20 suitable for the rack 70 being mounted at the fourth level can be performed.

Even when guidance displaying content such as "Adjust the rack position" is provided to the user in the guidance display step S55 and the user nevertheless ignores the guidance and inputs a cooking start signal by operating the knob 51 or a switch, the setting change step S65 may be performed.

After the setting change step S65 is performed as described above, and after cooking operation-related settings are changed so that the operation of the heating part 20 suitable for the actual mounting state of the rack 70 is performed, and cooking is then started, the controller 90 may control the operation of the heating part 20 so that automatic cooking is performed according to the changed heating intensity and heating time.

In another example, when the setting change step S65 is performed in a state where it is determined that the result values of the upper counting step S31, the lower counting step S32, and the height identifying step S33 are different from each other, cooking operation-related settings may be changed so that the operation of the heating part 20 suitable for any one selected from among the three result values is performed, or cooking operation-related settings may be changed so that the operation of the heating part 20 suitable for a middle value among the three result values is performed.

For example, when the result value in the upper counting step S31 is the second level, the result value in the lower counting step S32 is the fourth level, and the result value in the height identifying step S33 is the third level, cooking operation-related settings may be changed so that an operation suitable for any one of the rack 70 being mounted at the second level, the rack 70 being mounted at the third level, or the rack 70 being mounted at the fourth level is performed, or cooking operation-related settings may be changed so that an operation suitable for the rack 70 being mounted at the third level, which is a middle value among the three result values, is performed.

The control method of the cooking appliance according to the present embodiment, as described above, enables the mounting position of the rack 70 to be identified by using the mounting protrusion 15, which is a structure that must be provided in the cooking chamber 12 for supporting the rack 70.

The cooking appliance according to the present embodiment, which may identify the mounting position of the rack 70 in this manner, may effectively identify the mounting position of the rack 70 even without adding a separate marking or structure such as an indicator to the cooking appliance, thereby providing improved cooking performance while suppressing an increase in manufacturing cost.

In addition, the cooking appliance according to the present embodiment may identify the mounting position of the rack 70 by using the mounting protrusion 15, which forms a part of the cavity 11 and is formed to have sufficient strength to support the rack 70 and food supported on the rack 70.

Because the mounting protrusion 15 is a structure protruding from the cavity 11, the mounting protrusion 15 will not become blurred or disappear inside the cooking chamber 12 even after a long period of time, and even if foreign substances adhere to the mounting protrusion 15, the likelihood that recognition accuracy for the mounting protrusion 15 decreases is extremely low.

In addition, because the mounting protrusion 15 is formed to have sufficient strength to support the rack 70 and food supported on the rack 70, the likelihood that the mounting protrusion 15 is damaged due to repeated contact with the rack 70 during mounting or removal of the rack 70, and the likelihood that recognition accuracy for the mounting protrusion 15 decreases due to such damage, are extremely low.

The mounting protrusion 15 will not become blurred or disappear even after a long period of time, and even if foreign substances adhere to the mounting protrusion 15, the likelihood that recognition accuracy for the mounting protrusion 15 decreases is extremely low. In addition, because the mounting protrusion 15 is formed to have sufficient strength to support the rack 70 and food supported on the rack 70, the likelihood that the mounting protrusion 15 is damaged even when mounting or removal of the rack 70 is repeatedly performed is extremely low.

The cooking appliance according to the present embodiment may improve recognition accuracy for the mounting protrusion 15 by identifying a mounting position of the rack 70 using the mounting protrusion 15 as described above, and may thereby provide enhanced performance in identifying a rack position.

In addition, when a set position of the rack 70 and an actual position of the rack 70 differ from each other, the cooking appliance according to the present embodiment may change cooking operation-related settings to settings suitable for the actual mounting position of the rack 70, and may allow cooking to be performed according to the changed settings, thereby providing an effect of enabling optimal cooking according to the mounting position of the rack 70.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

10: main body
11: cavity
12 : cooking chamber
15 : mounting protrusion
20 : convection device
30: door
40: cooktop part
50: control panel
51: knob
52 : display
60 : electrical equipment chamber
70 : rack
75 : position indicator
80 : camera
90 : controller

## Claims

1. A method for controlling a cooking appliance, the cooking appliance including a mounting protrusion protruding into a cooking chamber from a side wall of a cavity forming the cooking chamber and a rack seated on any one of a plurality of mounting protrusions arranged in an up and down direction and mounted inside the cooking chamber, the method comprising:
an imaging step of imaging the cooking chamber;
a recognition step of recognizing the mounting protrusion and the rack in an image obtained in the imaging step; and
a position determining step of determining a mounting position of the rack based on information identifying a position of the rack relative to the plurality of the mounting protrusions.

2. The method of claim 1, further comprising:
a counting step of identifying a number of the mounting protrusions arranged above the rack or a number of the mounting protrusions arranged below the rack,
wherein in the position determining step, a mounting position of the rack is determined based on information identified in the counting step.

3. The method of claim 2, further comprising:
a height identifying step of identifying a height of the rack,
wherein in the position determining step, a mounting position of the rack is determined based on information identified in the counting step and information identified in the height identifying step.

4. The method of claim 3,
wherein the rack includes a position indicator arranged at a front and rear end of the rack,
wherein in the recognition step, the position indicator is recognized, and
wherein in the height identifying step, a height of the position indicator recognized in the recognition step is identified.

5. The method of claim 3,
wherein the counting step includes an upper counting step of identifying a number of the mounting protrusions arranged above the rack and a lower counting step of identifying a number of the mounting protrusions arranged below the rack, and
wherein in the position determining step, when two or more result values among a result value in the upper counting step, a result value in the lower counting step, and a result value in the height identifying step are matched, a mounting position of the rack is determined based on the matched result value.

6. The method of claim 1, further comprising:
a comparison step of comparing a set value with a result value in the position determining step, and
a guidance display step of displaying guidance related to adjusting a rack position when the set value and the result value in the position determining step are different.

7. The method of claim 6, further comprising:
a door opening detecting step of detecting whether a door is opened after guidance is displayed in the guidance display step, and
a re-determining step of re-determining a mounting position of the rack when opening and closing of the door are sequentially detected in the door opening detecting step.

8. The method of claim 6, further comprising:
a door opening detecting step of detecting whether a door is opened after guidance is displayed in the guidance display step, and
a setting change step of changing cooking operation-related settings when opening of the door is not detected within a preset time in the door opening detecting step.

9. The method of claim 6, further comprising:
a setting changing step of changing cooking operation-related settings when a cooking start signal is input after guidance is displayed in the guidance display step.

10. A cooking appliance comprising:
a cavity in which a cooking chamber is formed;
a mounting protrusion protruding from a sidewall of the cavity into the cooking chamber;
a rack seated on any one of a plurality of mounting protrusions arranged in an up and down direction and mounted in the cooking chamber;
a camera imaging an inside of the cooking chamber; and
a controller determining a mounting position of the rack based on an image acquired by the camera,
wherein the controller recognizes the mounting protrusion and the rack in the image acquired by the camera and determines the mounting position of the rack based on information identified for a position of the rack with respect to the plurality of mounting protrusions.
